# EUROPEAN PATENT APPLICATION

(11) **EP 3 633 578 A1**
(43) Date of publication of application: **08.04.2020**
(21) Application number: 18197841.2
(22) Date of filing: 01.10.2018
(51) Int. Cl.: G06Q 30/02

(54) **METHOD FOR FORECASTING SALES VOLUME**

(71) Applicant: Mafrat S.P.A., 70017 Putignano (BA) (IT)
(72) Inventor: TOTARO, Giovanni, 70017 Putignano (BA) (IT); ZIPPO, Beatrice, 70017 Putignano (BA) (IT); CAPALBO, Vincenzo, 73100 LECCE (IT); DEL PRETE, Antonio, 73100 LECCE (IT); FILITTI, Giuseppe, 73100 LECCE (IT)
(74) Representative: Conversano, Gabriele

(57) **Abstract**

The invention reaches the prefixed aims since it provides a software application, which can be implemented on electronic computing means, configured to carry out an analysis of company sales and of the feedbacks expressed on social networks by potential customers of said company, comprising software tools (1) installed on a remote server, configured to communicate:
- with a user interface (2) which can be accessed to by the Web service by any mobile device by means of suitable access credentials;
- with a plurality of platforms of social networks (3),
- with a company information system (4),
said software tools being also configured to carry out the analysis of the acquired data, and to store data and results in dedicated databases (5), characterized in that said software application comprises also data analysis tools (13) based on statistical techniques and on algorithms/sentiment analysis techniques which make use of semantic analysis algorithms.

## Description

Object of the present invention is a Business Intelligence method, which, also by means of feedbacks expressed on social networks by potential customers, allows to monitor company performances and to carry out future sales volume forecasting, with particular reference to the field of retail sales.

### Technical field

As in many other fields, also in the retail one, historical data generated by the commercial chain (sales quantity, products, prices...) are recognized as a heritage to be put at good use to improve performances (stocks reductions, improvement of the operating margin, etc.). It is also known that such improvement can be pursued thanks to the use of information tools able to carry out: storing, aggregation and analysis of these data.

A classic example is represented by the adoption of commercial products of Business Intelligence and Dashboarding. These tools support companies in the analysis of data generated by the commercial chain and of those coming from the market, but the output produced by the tools of these categories known at the state of the art is limited to the data representation, which can occur in various ways.

In fact, the tools known at the state of the art do not provide further added value in terms of "suggestions" which emerge from the analysis of the same data. In other words, the known tools do not provide an analytical answer to the question: "what are the data I'm viewing saying to me?", leaving the answer to this question to the experience of the user who views the data and who, while composing the views to be analyzed, has already in mind what he wants to analyze. So, it is clear that the final performance of these tools is strongly dependent on the skills, intuition and experience of the single user.

Moreover, the business intelligence tools known at the state of the art are limited conceptually by the fact that they work on company databases (which contain all the data concerning past sales), but they explicitly do not consider the outer market context and its evolution, which is often very fast.

As a way of example, for better figuring the field of interest, it is to be specified that for a company operating in the field of retail sales, it is surely useful to be provided with an analysis tool able to analyze all the sales transactions of the last three years and to process a forecasting vision of what could be the sales profile for product typology and for localization and typology of each sales point. Anyway, such a tool, even if useful, would be limited to monitor company data without considering the evolutions in the market the company operates in, and in particular the evolution over time of users feedbacks.

With regard to what just described, an added value could be a method which can be implemented by means of information tools, which allows to process data provided by the commercial chain in order to extract not explicit information contained in the same, to formulate forecasting about future sales volumes and to provide suggestions concerning the need to modify product and/or commercial strategy. In order to implement this last function, in particular it is needed to analyze, in addition to company data, also the market context and its evolution, according to what described in the following.

With regard to the systems known at the state of the art, in order to increase the significance of the forecasting analysis it can be useful to enrich the starting base of the available data by means of information available on the social networks or more generally on the Web, gathered, analyzed and used according to what described in the following. At the state of the art there are not known systems and methods able to obtain the above described results. From a careful analysis of the literature the following contributions emerge, which, even showing the interest of the scientific community concerning this problem, do not describe solutions able to implement what above described.

Recently, the results of some researches have been published, which starting from the Bass model (Bass, F. M. (1969) A new product growth for model consumer durables. Management Science, 15(5), 215-227) have developed new methodologies for sales forecasting by analyzing data coming from the sentiment analysis on products [Zhi-Ping Fan, Yu-Jie Che, Zhen-Yu Chen, Product sales forecasting using online reviews and historical sales data: A method combining the Bass model and sentiment analysis (Journal of Business Research 74 (2017) 90-100)]. The scientific literature is being enriched with important contributions concerning the evaluation of what could be in the next future the impact of the application of Artificial Intelligence (AI) and Machine Learning on sales processes and their management [Niladri Syama, Arun Sharma, Waiting for a sales renaissance in the fourth industrial revolution: Machine learning and artificial intelligence in sales research and practice (Industrial Marketing Management 69 (2018) 135-146)]. An element to be taken in consideration remains also the study of semantic analysis techniques, which little by little is extended to the most different fields of application, thus suggesting the extreme flexibility of use [Petr Hajek, Roberto Henriques, Mauro Castelli, Leonardo Vanneschi, Forecasting performance of regional innovation systems using semantic-based genetic programming with local search optimizer (Computers and Operations Research 000 (2018) 1-12)]. As for the semantic analysis, also the application of techniques based on neural networks (Artificial Neural Network (ANN)) with the development of new models thought to supply tools for sales forecasting analysis is object of international publications [Yong Yu, Tsan-Ming Choi, Chi-Leung Hui, An intelligent fast sales forecasting model for fashion products (Expert Systems with Applications 38 (2011) 7373 - 7379)]. Also the very fertile Big Data research area sees the publication of results of absolute interest concerning the development of architectures able to integrate data coming from not traditional sources in order to supply forecasting tools of social and economic behaviors by forecasting their evolution and possible changes [Desamparados Blazquez, Josep Domenech, Big Data sources and methods for social and economic analyses (Technological Forecasting & Social Change 130 (2018) 99-113)].

The tools underlying the method described in the following make use of the Semantic Analysis (SA), a rather recent research field. Even if SA is strictly linked to the more tested Data Mining field, it suffers from the type of data to be treated in particular way.

The term "semantic Web" was introduced by its inventor, the researcher Tim Berners-Lee, to indicate the transformation of the World Wide Web in an environment where the published documents (such as, for example HTML pages, etc.) are associated to specific information, metadata, apt to specify their semantic context.

Therefore, it is the information, which has to be structured so that it is possible its consulting and interpretation, and more in general, has to prepare the ground for the automatic processing, by means of computers, of the content of the same documents.

Most of the time, the information, which can be intended also as the ensemble of knowledge, is lost among various sources scattered on the Web.

The main goal of the semantic Web is to make the machines able to extract and deduce new knowledge autonomously. Currently, there exist systems able to represent knowledge, intended as the definition of a domain, of its specifications, its properties and relations with other domains, by means of ontologies: this can be realized for quite restricted and well specified domains.

Anyway, the goal is to create an ever wider spectrum of domains of knowledge, which can be enriched by man (by means of contributions of single individuals) and represented in automated way by the machines.

In this scenario, in which it is desired to determine the document semantics a natural applicative consequence is the possibility to extract feedbacks by means of suitable processing methods of textual documents.

From here the birth of a series of social media analytics and digital reputation tools, among which sentiment analysis deserves particular attention. What people think has always been a fundamental datum in the field of decision-making processes. It is not only a matter of semantics, in which the information gathering can be based on architecture structures of data gathering, nowadays the brand and feedbacks discussions occur on the Web and companies are beginning to think how to carry out market researches and analyses by using the feedbacks which customers and potential customers put on the Web daily.

To detect the feedback of a great number of customers about a brand allows to carry out correlations between customers who think in a determined way of a determined product, to modify the promotion method of the product and sometime even the same product.

How one can simply realize, a limit of the sentiment analysis techniques is linked to linguistic aspects. The languages little diffused in the scientific community have been penalized so far, or as the case of Asian languages, little used on the Web. To this limit, while using the sentiment analysis for brand reputation, other difficulties are added due to the news categorization and sectorialization (so the brand reputation can vary according to which field of activity of an organization is taken in consideration), to multimodality which is ever more needed in presence of very heterogeneous data sources, to the need to translate the sentiment in synthetic indicators (KPI - key performance indicator) immediately interpretable at the organization management level.

### Aim of the invention

Therefore, in the light of what just described, aim of the present invention is to provide a business intelligence system, comprising a data analysis method which can be implemented by means of suitable computing tools, which allows to improve company performances in the retail field, by means of integration of a Recommender system functional for the Customer Relationships Management with Data Analytics tools and Predictive tools on statistical basis.

According to another aim the present invention provides a business intelligence tool, which allows to use, for future sales forecasting formulation, both data relating to the company sales history and information available on various platforms of social networks and/or Web sites.

Another aim is to provide a method in which information available on social networks and/or online are gathered by using crawlers, and in the following analyzed thanks to the use of machine learning tools able to carry out a semantic analysis of contents oriented at extracting significant elements for the analyses which it is desired to be carried out.

### Brief description of the invention

The invention reaches the prefixed aims since it provides a software application which can be implemented on electronic computing means, configured to carry out an analysis of company sales and of the feedbacks expressed on social networks by potential customers of said company, comprising software tools (1) installed on a remote server, configured to communicate:
- with a user interface (2) which can be accessed to by the Web service by any mobile device by means of suitable access credentials;
- with a plurality of platforms of social networks (3),
- with a company information system (4),
said software tools being also configured to carry out the analysis of the acquired data, and to store data and results in dedicated databases (5), characterized in that said software application comprises also data analysis tools (13) based on statistical techniques and on algorithms/sentiment analysis techniques which make use of semantic analysis algorithms.

### Detailed description of the invention

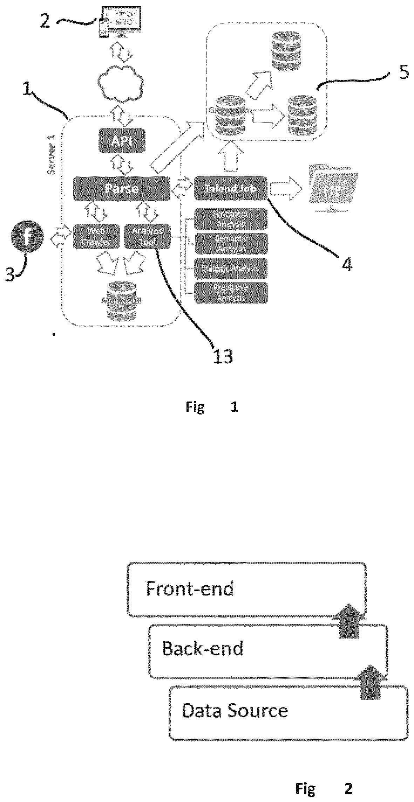

The invention will be described with reference to the appended figures 1 to 8.

The business intelligence method according to the invention comprises a software application which can be implemented on electronic computing means, configured to carry out an analysis of company sales and of feedbacks expressed on social networks by potential customers, in order to find out a useful relation for forecasting the same sales carried out by the analyzed company, which considers the evolution of the market context. The present invention provides also electronic computing means, comprising server and devices for user interaction, on which it is downloaded a program for computer which implements the method according to the invention, described in the following.

In order to be able to consider the feedbacks expressed on social networks by potential customers, it is fundamental to be able to be provided with tools useful for: gathering messages produced by potential customers on the Web (in form of posts on social networks of any type and/or comments on forums and Web sites), automatically analyzing the content of the same and obtaining then reputational trends on the Web with reference to the company and its products.

### Architecture of the application

Figure 1 shows the structure of a software application configured for implementing the method according to the invention, as well as the interaction modes of the same with the company infrastructure IT.

From the analysis of figure 1, it is clear how, in a preferred embodiment, the information application implementing the method according to the invention comprises software tools (1) installed on a remote server, configured to communicate: with a user interface (2) which can be accessed to by means of the Web service from any device; with a plurality of social network platforms (3) and with a company information system (4). Said software tools are also configured to carry out the analysis of the acquired data, and to store data and results in dedicated databases (5).

Therefore, from a first analysis of figure 1, it is possible to highlight a stratification of the architecture, better shown in figure 2.

The highest layer of this subdivision represents the front-end, which comprises the user interface (2) accessible to in Web-based mode.

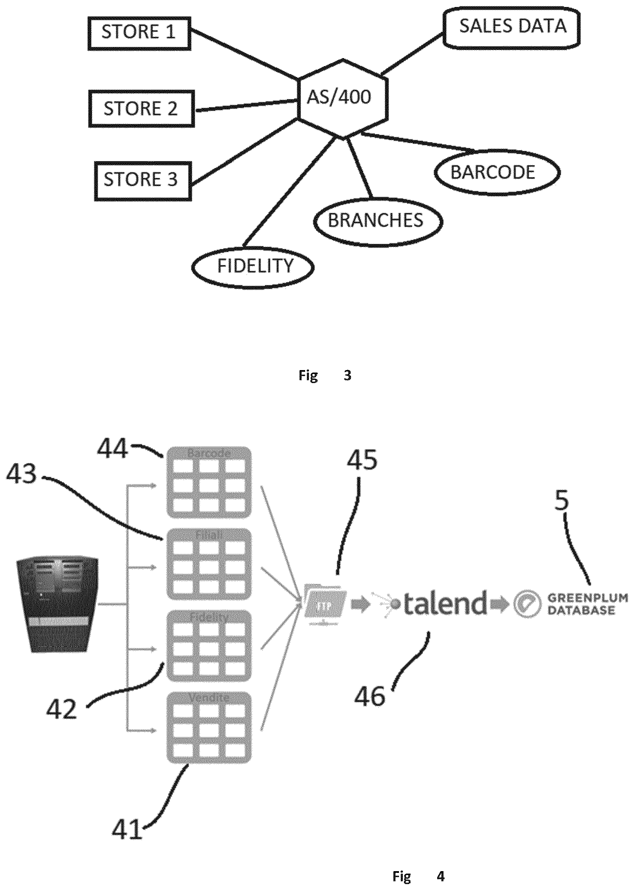

The intermediate layer, back-end, comprises the application downloaded on remote server (1) and configured to proceed with the extraction of company data and contents on social networks, their analysis and storage of the same on a database (5). Finally, the lowest level comprises data which feed such system, i.e. sales data provided by the company (4) and data coming from the social pages (3) of the company, object of the case study. In particular, the sales data are generated by the various transactions carried out in the various sales points. Each single transaction, whether it is a sale or return, is stored in real time in different tables stored in a relational database of the AS/400 machine, as shown in figure 3.

The flow of data gathering is shown in figure 4: data coming from various sources, such barcodes (44), branches (43), fidelity (42), sales (41) are stored in a ftp folder (45) and from this one imported by a dedicated application (46) in the database (5).

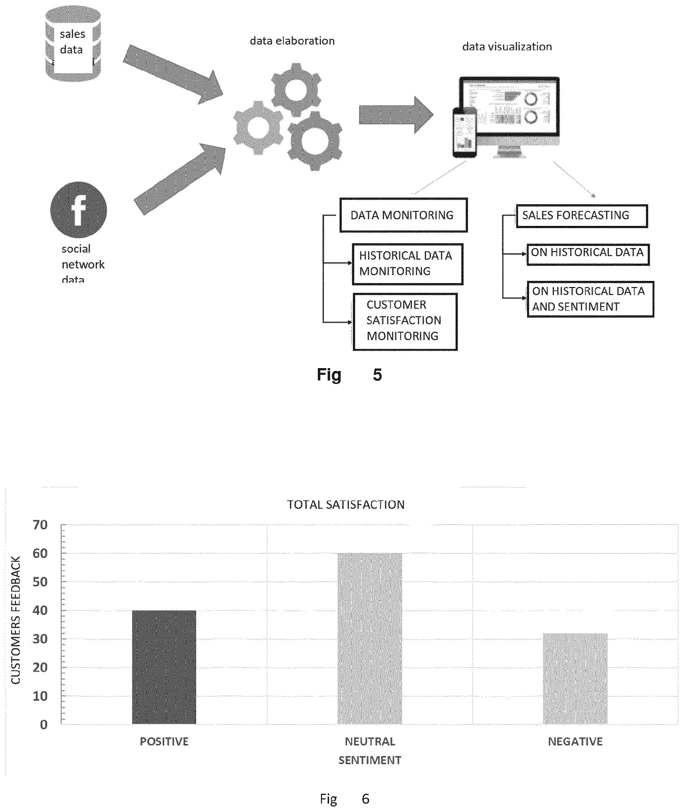

The data flow is also shown in figure 5, in which it is shown: the origin of the data from company databases and social networks, the processing of the same data and the visualization by means of remote devices.

With reference to the back-end status (1), in a preferred embodiment this one comprises a first service used for the management of DB (11). This service is preferably Parse, and allows to connect different types of applications as for example a mobile application and Web applications. Moreover, it allows the developer to focus his own attention on the front-end side without concerning about how the data are managed by DB. Parse is a typical BaaS model (Back-end as a services) which provides a series of services provided by using personalized software developing kits (SDK (Software Development Kit)) and programming interfaces of the applications (APIs), a sort of functions which allow the communication between the cloud or DB and the various applications, thus serving as bridge between the front-end and the back-end.

The back-end layer (1) comprises also tools for gathering (12) data from social networks (3) and for analysis of this information.

### Function

By means of the just described architecture, the Business Intelligence system (BI) possibly used in companies in the retail field allows to provide the users, managers and administrative staff with the descriptive metrics of company performances, comprising a plurality of KPIs (Key Performance Indicators).

In particular, in order to provide besides reports concerning past sales, also forecasting concerning future sales, as yet said, the back-end layer (1) of the system comprises data analysis tools (13) based on statistical techniques and algorithms/sentiment analysis techniques, which make use of semantic analysis algorithms. In particular, semantic analysis tools (11) are configured so that they carry out, on posts and/or messaged gathered on social network platforms (3), the operations of:
a. semantic analysis
b. sentiment analysis.

The semantic analysis operations allow to analyze the text of the post and to individuate which product category is being talked about; the sentiment analysis allows instead to monitor customers feedbacks in order to detect if the feedback expressed by the same is positive, neutral or negative.

Therefore, the sentiment analysis algorithm implemented in the tool comprises:
i. 1 dictionary of sentiwords (words expressing a feedback) in which to each word contained it is associated a complex number in which the real part indicates the positivity and the imaginary part the negativity. More exactly, the word is the stemming (method for grouping various forms of a word) of a substantive or an adjective of the language in question, for example Italian.
ii. 1 dictionary of sentiment modulators, in which the value is a coefficient (in the more general model, an ensemble of coefficients) of amplification/decreasing to be applied to other words, which are close in the analyzed text.

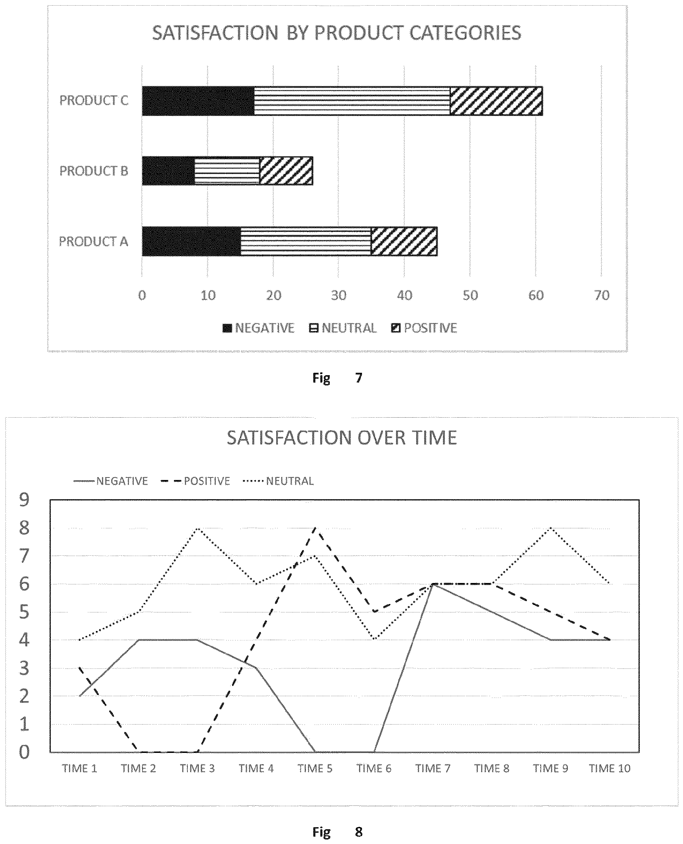

So, the just described system is configured to provide in output, for a ready use by users, the results of the analysis of the satisfaction level of the customer by means of suitable graphs, which show the following trends:
- measured sentiment values, differentiated by type (positive, neutral, negative) (figure 6);
- sentiment values as a function of the product categories (figure 7);
- sentiment values as a function of time (figure 8).

In the following, it is reported a concrete numerical example concerning what above described. In particular, it is supposed the presence of 3 different product classes: PRODUCT A, PRODUCT B, PRODUCT C. The data gathered for sentiment can be summed up in the following tables:

**Table 1 Total satisfaction**

| TOTAL DATISFACTION | |
|---|---|
| POSITIVE FEEDBACKS | 40 |
| NEUTRAL FEEDBACKS | 60 |
| NEGATIVE FEEDBACKS | 32 |

**Table 2 Average satisfaction by product category**

| FEEDBACK | POSITIVE | NEUTRAL | NEGATIVE |
|---|---|---|---|
| PRODUCT A | 15 | 20 | 10 |
| PRODUCT B | 8 | 10 | 8 |
| PRODUCT C | 17 | 30 | 14 |

**Table 3 Satisfaction over time**

| SATISFACTION OVER TIME | | | |
|---|---|---|---|
| FEEDBACK | NEGATIVE | POSITIVE | NEUTRAL |
| TIME 1 | 2 | 3 | 4 |
| TIME 2 | 4 | 0 | 5 |
| TIME 3 | 4 | 0 | 8 |
| TIME 4 | 3 | 4 | 6 |
| TIME 5 | 0 | 8 | 7 |
| TIME 6 | 0 | 5 | 4 |
| TIME 7 | 6 | 6 | 6 |
| TIME 8 | 5 | 6 | 6 |
| TIME 9 | 4 | 5 | 8 |
| TIME 10 | 4 | 3 | 6 |

In figure 6 the sentiment trend by typology (positive, neutral, negative) is reported in a bar graph; in figure 7 the sentiment trend is shown as a function of the product category; in figure 8 it is possible to observe the sentiment trend over time inside an area graph:
So, it is observed how, by means of the described method, implemented on suitable computing means, it is possible:
- to monitor data relating to the daily company management;
- to monitor, quantitatively and qualitatively, the company performances by means of extraction of precious information coming from historical data possessed by the company and those ones relating to customers feedbacks on social network platforms of reference for the company;
- to carry out forecasting about the future sale volumes on the basis of the information extracted by available data (historical data + data coming from social networks).

In particular, while carrying out the future sale forecasting, preferably the method according to the invention uses a statistical model ARIMAX or SARIMAX (depending on whether there is seasonality in the turnover trend) for inclusion of the explicative variable of average sentiment inside the forecasting model, in order to be able to carry out a more careful analysis of the historical series and so to obtain more reliable forecasting.

## Claims

1. Software application which can be implemented on electronic computing means, configured to carry out an analysis of company sales and of the feedbacks expressed on social networks by potential customers of said company, comprising software tools (1) installed on a remote server, configured to communicate:
- with a user interface (2) which can be accessed to by the Web service by any mobile device by means of suitable access credentials;
- with a plurality of platforms of social networks (3),
- with a company information system (4),
said software tools being also configured to carry out the analysis of the acquired data, and to store data and results in dedicated databases (5), **characterized in that** said software application comprises also data analysis tools (13) based on statistical techniques and on algorithms/sentiment analysis techniques which make use of semantic analysis algorithms.

2. Software application which can be implemented on electronic computing means according to claim 1, **characterized in that** said semantic analysis algorithms (11) are configured so that they carry out, on posts and/or messages gathered by said application on said social networks platforms (3), the operations of semantic analysis which allow to analyze the text of the post and to individuate which product category in being talked about.

3. Software application which can be implemented on electronic computing means according to claim 2, **characterized in that** said sentiment analysis algorithms allow to monitor customers feedbacks in order to detect if the feedback expressed by the same is positive, neutral or negative and **in that** said sentiment analysis algorithm comprises:
i. 1 dictionary of sentiwords (words expressing a feedback) in which to each word contained it is associated a complex number in which the real part indicates the positivity and the imaginary part the negativity. More exactly, the word is the stemming (method for grouping various forms of a word) of a substantive or an adjective of the language in question, for example Italian.
ii. 1 dictionary of sentiment modulators, in which the value is a coefficient (in the more general model, an ensemble of coefficients) of amplification/decreasing to be applied to other words, which are close in the analyzed text.

4. Software application which can be implemented on electronic computing means according to any one of the preceding claims, **characterized in that** the architecture of said application comprises three layers:
- a front-end layer, which comprises the user interface (2) accessible to in Web-based mode;
- a back-end layer configured to proceed with the extraction of company data and contents on social networks, their analysis and storage of the same on a database (5),
- a lower level layer comprising data which feed such system, comprising sales data provided by the company (4) and data coming from the social pages (3) of the company.

5. Electronic computing means, comprising server and remote devices for user interaction, on which it is downloaded a software application according to any one of the preceding claims.
